# EUROPÄISCHE PATENTSCHRIFT

(11) **EP 2 478 204 B1**
(45) Veröffentlichungstag und Bekanntmachung des Hinweises auf die Patenterteilung: **06.05.2015**
(21) Anmeldenummer: 10751629.6
(22) Anmeldetag: 31.08.2010
(51) Int. Cl.: F02M 25/07, F02B 37/18, F16K 31/44

(54) **STELLVORRICHTUNG UND KOPPLUNGSEINRICHTUNG**
CONTROL UNIT AND COUPLING DEVICE
DISPOSITIF DE RÉGLAGE ET DISPOSITIF D'ACCOUPLEMENT

(30) Priorität: 17.09.2009 DE 102009041963
(43) Veröffentlichungstag der Anmeldung: 25.07.2012
(73) Patentinhaber: Mahle International GmbH, 70376 Stuttgart (DE)
(72) Erfinder: SCHADLER, Werner, A-8430 Seggauberg (AT); RAGOGNA, Robert, A-9500 Villach (AT)
(74) Vertreter: BRP Renaud & Partner mbB Rechtsanwälte Patentanwälte Steuerberater
(86) Internationale Anmeldenummer: PCT/EP2010/062690
(87) Internationale Veröffentlichungsnummer: WO 2011/032826

(56) Entgegenhaltungen:
- EP-A1- 1 201 907
- WO-A2-2008/072984
- CN-A- 101 411 661
- DE-A1- 2 248 018
- DE-A1- 2 921 281
- DE-A1- 3 510 351
- DE-A1- 10 344 218
- DE-A1-102007 054 769
- JP-U- 51 005 035

## Beschreibung

Die vorliegende Erfindung betrifft eine Kopplungseinrichtung für eine Stellvorrichtung zum Betätigen eines Stellglieds, insbesondere bei einer Brennkraftmaschine, vorzugsweise in einem Kraftfahrzeug. Die Erfindung betrifft außerdem eine mit einer derartigen Stellvorrichtung ausgestattete Brennkraftmaschine sowie eine zugehörige Verwendung.

Bei Brennkraftmaschinen existieren eine Vielzahl von Fluidpfaden, z. Bsp. zur Führung von Kühlmittel, Abgas, Frischluft und dergleichen. Um den Durchfluss dieser Fluide steuern zu können, lassen sich Stellglieder verwenden, z. Bsp. in Form von Ventilgliedern oder Drosselgliedern. Zur Verstellung bzw. zur Betätigung derartiger Stellglieder kommen Stellvorrichtungen der eingangs genannten Art zum Einsatz. Eine derartige Stellvorrichtung umfasst üblicherweise einen Stellantrieb zum bidirektionalen Antreiben eines Antriebsglieds. Ferner ist ein mit dem jeweiligen Stellglied zu verbindendes Abtriebsglied vorgesehen, das mit Hilfe einer Kopplungseinrichtung mit dem Antriebsglied gekoppelt ist.

Je nach Anwendungsgebiet können die Stellvorrichtungen vergleichsweise hohen Anforderungen hinsichtlich Toleranzverträglichkeit sowie hinsichtlich der zu erzeugenden Stellkräfte ausgesetzt sein. Beispielsweise können abgasseitig angeordnete Stellglieder durch Ruß oder dergleichen besonders schwergängig sein. Ebenso können Herstellungstoleranzen dazu führen, dass Relativlagen zwischen dem Stellglied und der Stellvorrichtung auszugleichen sind. Darüber hinaus sollen derartige Stellvorrichtungen besonders preiswert herstellbar sein, insbesondere dann, wenn sie im Rahmen einer Großserie bei Kraftfahrzeugen zur Anwendung kommen.

Beispielsweise ist es möglich, die Kopplungseinrichtung mit einem Kugelkopfgelenk auszustatten, wodurch das Antriebsglied mit dem Abtriebsglied um eine parallel zur Bewegungsrichtung verlaufende Drehachse verdrehbar und um eine Schar von quer zur Drehachse verlaufenden Schwenkachsen verschwenkbar verbunden ist. Ein derartiges Kugelkopfgelenk kann vergleichsweise teuer sein.

Aus der DE 22 48 018 A ist eine Stellvorrichtung zum bidirektionalen Betätigen eines Gaswechselventils einer Brennkraftmaschine bekannt, bei der mittels einer Nockenwelle ein Kipphebel betätigt wird, der seinerseits einen Stößel des Gaswechselventils betätigt. Dabei ist der Stößel um seine Längsmittelachse relativ zum Kipphebel verdrehbar gelagert. Weitere Stellvorrichtungen zum bidirektionalen Betätigen von Stellgliedern sind aus der DE 10 2007 054 769 A1, DE 29 21 281 A1 und DE 103 44 218 A1 bekannt.

Aus der DE 35 10 351 A1 ist ein Wasserhahn in Form eines Einhandmischers bekannt, bei dem ein Betätigungshebel zum Einstellen einer Wassermenge um eine horizontale Achse schwenkbar ist und zum Einstellen einer Wassertemperatur um eine vertikale Achse drehbar ist. Der Betätigungshebel ist dazu im Inneren eines Gehäuses mit einem Steuerzapfen gekoppelt, der seinerseits mit einem Ventilorgan gekoppelt ist, mit dem eine Warmwasserzuführung und eine Kaltwasserzuführung hinsichtlich Menge und Mischung steuerbar sind.

Die vorliegende Erfindung beschäftigt sich mit dem Problem, für eine Kopplungseinrichtung bzw. für eine Stellvorrichtung der eingangs genannten Art bzw. für eine damit ausgestattete Brennkraftmaschine bzw. für eine zugehörige Verwendung eine verbesserte oder zumindest eine andere Ausführungsform anzugeben, die sich insbesondere durch eine preiswerte Herstellbarkeit auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Kopplungseinrichtung so auszugestalten, dass sie einerseits ein Drehlager zur drehbaren Lagerung zwischen Antriebsglied und Abtriebsglied um eine parallel zur Längsrichtung der Kopplungseinrichtung bzw. zur Bewegungsrichtung der Kopplungseinrichtung verlaufende Drehachse und andererseits ein Schwenklager zur schwenkbaren Lagerung zwischen Antriebsglied und Abtriebsglied um eine quer zur Drehachse verlaufende Schwenkachse aufweist. Drehlager und Schwenklager sind dabei separate Lager. Dadurch ist es möglich, das jeweilige Lager für die jeweilige Lagerfunktion zu spezialisieren und zu optimieren. Die Erfindung nutzt hierbei die Erkenntnis, dass es für eine Vielzahl von Anwendungen nur für die Montage und Justage im Rahmen des Einbaus der Stellvorrichtung erforderlich ist, das Abtriebsglied um die Drehachse relativ zum Antriebsglied zu verdrehen, um den gewünschten Toleranzausgleich herstellen zu können. Im Betrieb der Stellvorrichtung benötigt die Kopplungseinrichtung dann nur noch die Verschwenkbarkeit zwischen Antriebsglied und Abtriebsglied. Beruhend auf dieser Erkenntnis kann das Drehlager sehr viel einfacher und somit preiswerter realisiert werden, wodurch insgesamt die Herstellungskosten z. Bsp. im Vergleich zu einem Kugelkopfgelenk gesenkt werden können, auch wenn zwei separate Lager zum Einsatz kommen.

Erfindungsgemäß weist die Kopplungseinrichtung ein Lagergehäuse auf, an dem sowohl das Drehlager als auch das Schwenklager ausgebildet sind. Hierdurch kann die Kopplungseinrichtung trotz der beiden Lager kompakt realisiert werden. Weiter ist erfindungsgemäß vorgesehen, dass das Schwenklager einen zylindrischen Lagerzapfen aufweist, dessen Längsmittelachse die Schwenkachse definiert.

Bei einer ersten alternativen Ausführungsform kann der Lagerzapfen über einen Lagerring am Lagergehäuse um die Schwenkachse verschwenkbar abgestützt sein, während gleichzeitig der Lagerring um die Drehachse drehbar am Lagergehäuse abgestützt ist. Das Schwenklager ist somit zwischen dem Lagerzapfen und dem Lagerring ausgebildet, während das Schwenklager zwischen dem Lagerring und dem Lagergehäuse ausgebildet ist. Die Drehachse verläuft dabei koaxial zu einer Längsmittelachse des Lagergehäuses.

Bei einer zweiten alternativen Ausführungsform wird das Schwenklager zwischen dem Lagerzapfen und dem Lagergehäuse direkt gebildet, während das Drehlager zwischen dem Lagergehäuse und dem Antriebsglied ausgebildet ist. Die Drehachse wird dann durch die Längsmittelachse des Antriebsglieds definiert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Seitenansicht einer Stellvorrichtung im Bereich einer Kopplungseinrichtung,
- Fig. 2: eine Schnittdarstellung der Stellvorrichtung bzw. der Kopplungseinrichtung entsprechend Schnittlinien II in Fig. 1,
- Fig. 3: eine Draufsicht der Stellvorrichtung bzw. der Kopplungseinrichtung entsprechend einer Blickrichtung III in Fig. 1,
- Fig. 4: eine auseinander gezogene Darstellung der Stellvorrichtung bzw. der Kopplungseinrichtung aus Fig. 1,
- Fig. 5: eine perspektivische Ansicht einer anderen Stellvorrichtung im Bereich der Kopplungseinrichtung,
- Fig. 6: eine Einzelteildarstellung der Stellvorrichtung bzw. der Kopplungseinrichtung aus Fig. 5,
- Fig. 7: einen Längsschnitt der Stellvorrichtung aus bzw. der Kopplungseinrichtung Fig. 5,
- Fig. 8: einen Längsschnitt wie in Fig. 7, jedoch in einer um 90° gedrehten Schnittebene.

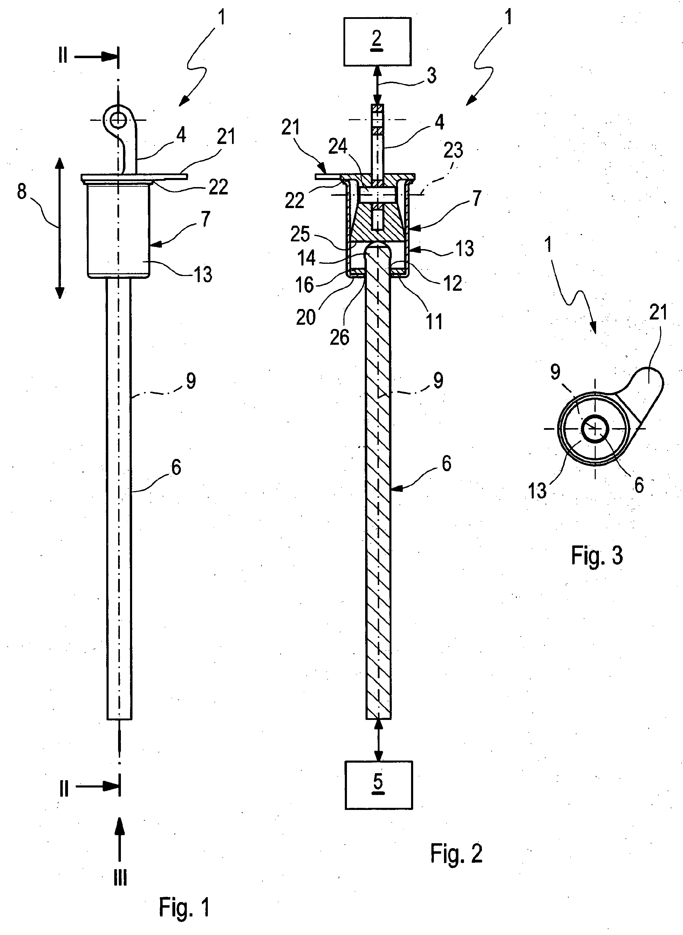

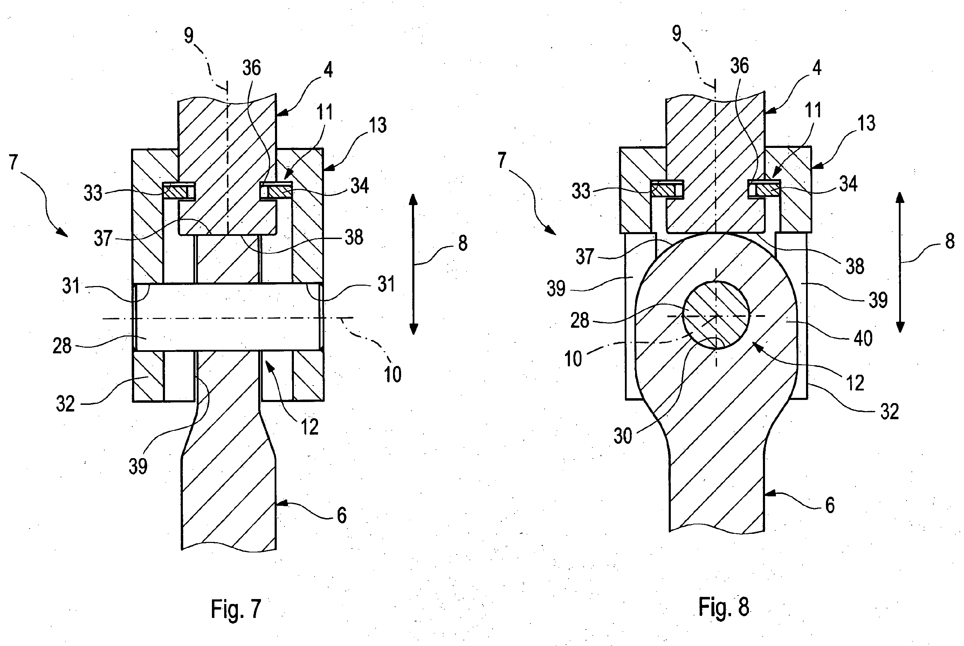

Entsprechend den Fig. 1 bis 8 umfasst eine Stellvorrichtung 1 einen in Fig. 2 vereinfacht dargestellten Stellantrieb 2 zum bidirektionalen Antreiben entsprechend einem Doppelpfeil 3 eines Antriebsglieds 4. Mit Hilfe der Stellvorrichtung 1 kann ein in Fig. 2 vereinfacht dargestelltes Stellglied 5 bidirektional betätigt werden. Beispielsweise handelt es sich beim Stellglied 5 um ein Ventilglied, bspw. ein Wästegate-Ventil eines Abgasturboladers. Die bidirektionale Verstellbarkeit beinhaltet lineare und rotatorische Verstellbewegungen des Stellglieds 5 zwischen zwei Endstellungen.

Die Stellvorrichtung 1 umfasst des weiteren ein Abtriebsglied 6 das im montierten Zustand mit dem Stellglied 5 auf geeignete Weise antriebsgekoppelt ist, sowie eine Kopplungseinrichtung 7, welche das Antriebsglied 4 mit dem Abtriebsglied 6 koppelt. Insgesamt ergibt sich dadurch eine bidirektional verstellbare Einheit aus Antriebsglied 4, Kopplungseinrichtung 7 und Abtriebsglied 6. Eine entsprechende Bewegungsrichtung der Kopplungseinrichtung 7 ist in Fig. 1 durch einen Doppelpfeil angedeutet und mit 8 bezeichnet. Die Bewegungsrichtung 8 entspricht dabei einer Kopplungsrichtung der Kopplungseinrichtung 7, also einer Richtung, in welcher die Kopplungseinrichtung 7 Druck- und Zugkräfte zwischen dem Antriebsglied 4 und dem Antriebsglied 6 überträgt. Außerdem entspricht die Bewegungsrichtung 8 einer Längsrichtung der Kopplungseinrichtung 7.

Die Kopplungseinrichtung 7 ist so konzipiert, dass sie einerseits das Antriebsglied 4 mit dem Abtriebsglied 6 um eine Drehachse 9 verdrehbar koppelt, die sich parallel zur Bewegungsrichtung 8 erstreckt. Andererseits koppelt die Kopplungseinrichtung 7 das Antriebsglied 4 mit dem Abtriebsglied 6 verschwenkbar um eine Schwenkachse 10, die sich quer zur Drehachse 9 erstreckt. Hierzu umfasst die Kopplungseinrichtung 7 einerseits ein Drehlager 11 zur drehbaren Lagerung zwischen Antriebsglied 4 und Abtriebsglied 6 um die Drehachse 9 und andererseits ein Schwenklager 12 zur schwenkbaren Lagerung zwischen Antriebsglied 4 und Abtriebsglied 6 um die Schwenkachse 10. Dabei bleiben das Drehlager 11 und das Schwenklager 12 zwei separate Lager.

Die Kopplungseinrichtung 7 ist bei den hier gezeigten Ausführungsformen mit einem Lagergehäuse 13 ausgestattet. An oder in diesem Lagergehäuse 13 sind die beiden Lager, also das Drehlager 11 und das Schwenklager 12 ausgebildet.

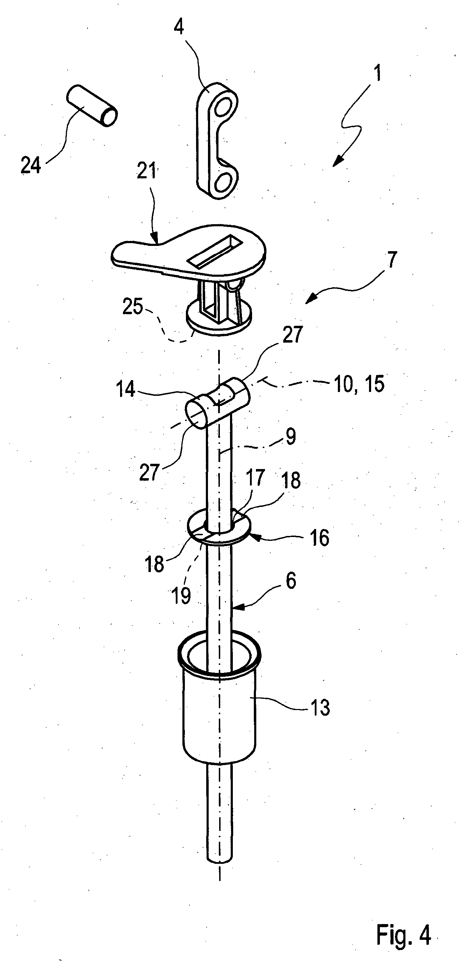

Bei der in den Fig. 1 bis 4 gezeigten Ausführungsform weist das Schwenklager 12 einen zylindrischen Lagerzapfen 14 auf, dessen Längsmittelachse 15 entsprechend Fig. 4 mit der Schwenkachse 10 zusammenfällt bzw. die Schwenkachse 10 definiert. Dieser Lagerzapfen 14 ist einerseits am Lagergehäuse 13 und andererseits am Abtriebsglied 6 abgestützt. Im Einzelnen ist der Lagerzapfen 14 fest am Abtriebsglied 6 angeordnet und im Lagergehäuse 13 um die Schwenkachse 10 schwenkbar angeordnet. Auf diese Weise wird zwischen dem Lagerzapfen 14 und dem Lagergehäuse 13 das Schwenklager 12 realisiert. Zur Realisierung des Drehlagers 11 kann der Lagerzapfen 14 außerdem um die Drehachse 9 drehbar am Lagergehäuse 13 angeordnet sein. Realisiert wird dies bei der in den Fig. 1 bis 4 gezeigten Ausführungsform dadurch, dass sich der Lagerzapfen 14 über einen Lagerring 16 am Lagergehäuse 13 in der Bewegungsrichtung 8 abstützt. Der Lagerring 16 weist eine zentrale Öffnung 17 auf, die vom Abtriebsglied 16 durchsetzt ist. Beiderseits dieser Öffnung 17 weist der Lagerring 16 diametral gegenüberliegend je eine zylindersegmentförmige Lagerkontur 18 auf. Auf diesen Lagerkonturen 18 stützt sich der Lagerzapfen 14 in der Bewegungsrichtung 8 ab. In diesen Lagerkonfuren 18 ist der Lagerzapfen 14 außerdem um die Schwenkachse 10 schwenkbar gelagert. Zur Realisierung des Drehlagers 11 kann nun der Lagerring 16 am Lagergehäuse 13 um die Drehachse 9 drehbar abgestützt sein. Zweckmäßig kann der Lagerring 16 hierzu an einer von den Lagerkonturen 18 abgewandten Seite eine ebene Lagerköntur 19 aufweisen, die sich ringförmig erstreckt und welche die Öffnung 17 umschließt. Über diese ebene Lagerkontur 19 stützt sich der Lagerring 16 am Lagergehäuse 13 ab und ist dabei relativ zum Lagergehäuse 13 um die Drehachse 9 drehbar. Beispielsweise weist das Lagergehäuse 13 einen nach innen vorstehenden Kragen 20 auf, auf dem der Lagerring 16 an einer dem Lagerzapfen 14 zugewandten Innenseite zur Anlage kommt.

Die Kopplungseinrichtung 7 weist außerdem eine Lagerkonsole 21 auf, die am Lagergehäuse 13 befestigt ist, bspw. mittels einer Schweißnaht 22. Die Lagerkonsole 21 bildet gleichzeitig einen Verschluss für das topfförmige Lagergehäuse 13. An der Lagerkonsole 21 ist das Antriebsglied 4 angebracht. Beispielsweise kann das Antriebsglied 4 um eine Kopplungsachse 23 verschwenkbar an der Lagerkonsole 21 angebracht sein, wobei sich auch diese Kopplungsachse 23 quer zur Drehachse 9 erstreckt. Beispielsweise ist das Antriebsglied 4 mittels einer Welle 24 an der Lagerkonsole 21 angebracht, die zylindrisch ausgestaltet ist und deren Längsmittelachse die Kopplungsachse 23 definiert.

Vorzugsweise besitzt die Lagerkonsole 21 eine ebene und insbesondere quer zur Drehachse 9 orientierte Lagerseite 25, die sich an einer vom Antriebsglied 4 abgewandten Seite der Lagerkonsole 21 befindet. Hierdurch ist die Lagerseite 25 dem Abtriebsglied 6 zugewandt. Die Dimensionierungen von Lagerkonsole 21, Lagergehäuse 13, Lagerzapfen 14 und gegebenenfalls des Lagerrings 16 sind so aufeinander abgestimmt, dass sich der Lagerzapfen 14 an dieser Lagerseite 25 der Lagerkonsole 21 zumindest bei einer Druckbeiastung bzw. Druckkraftübertragung abstützt.

Das Abtriebsglied 6 ist hier als Stange ausgestaltet und dringt durch eine Durch,gangsöffnung 26 in das Innere des Lagergehäuses 13. Ferner durchsetzt das Abtriebsglied 6 die Öffnung 17 des Lagerrings 16. Die Durchgangsöffnung 26 und die Öffnung 17 besitzen eine Öffnungsweite, die größer ist als ein Querschnitt des Abtriebsglieds 6. Ferner ist die Länge des Lagerzapfens 14 in der Schwenkachse 10 kleiner als ein Innendurchmesser des Lagergehäuses 13. Hierdurch ergibt sich in der Schwenkachse 10 bzw. parallel zur Schwenkachse 10 ein Spiel für den Lagerzapfen 14 im Lagergehäuse 13. Durch dieses Spiel parallel zur Schwenkachse 10 können zusätzliche Relativverstellungen zwischen Antriebsglied 4 und Abtriebsglied 6 realisiert werden, was einen Toleranzausgleich im Rahmen der Montage der Stellvorrichtung erleichtert. Darüber hinaus kann der Lagerzapfen 14 an seinen Stirnseiten 27 nach außen konvex gekrümmt sein.

Der Lagerzapfen 14 bildet bei der in den Fig. 1 bis 4 gezeigten Ausführungsform das Längsende des Abtriebsglieds 6. Er kann an das Abtriebsglied 6 angebaut sein. Ebenso ist eine integrale Ausformung des Lagerzapfens 14 am Abtriebsglied 6 möglich. Diese integrale Ausformung kann in vorteilhafter Weise durch Fließpressen erzeugt werden. Dies hat den Vorteil, dass zwischen dem Lagerzapfen 14 und dem Abtriebsglied 6 durchgehende Spannungslinien vorhanden sind und daher eine Kerbwirkung zwischen diesen Teilen reduziert ist. Weiterhin kann der Durchmesser des Lagerzapfens 14 im Verhältnis zu dem Abtriebsglied 6 gleich groß oder sogar größer gewählt werden, wodurch die Lagerkräfte im Bereich des Lagerzapfens 14 optimiert werden.

Bei der in den Fig. 1 bis 4 gezeigten Ausführungsform ist über das Drehlager 11 das Abtriebsglied 6 am Lagergehäuse 13 drehbar gelagert. Über das Schwenklager 12 ist ebenfalls das Abtriebsglied 6 am Lagergehäuse 13 schwenkbar gelagert.

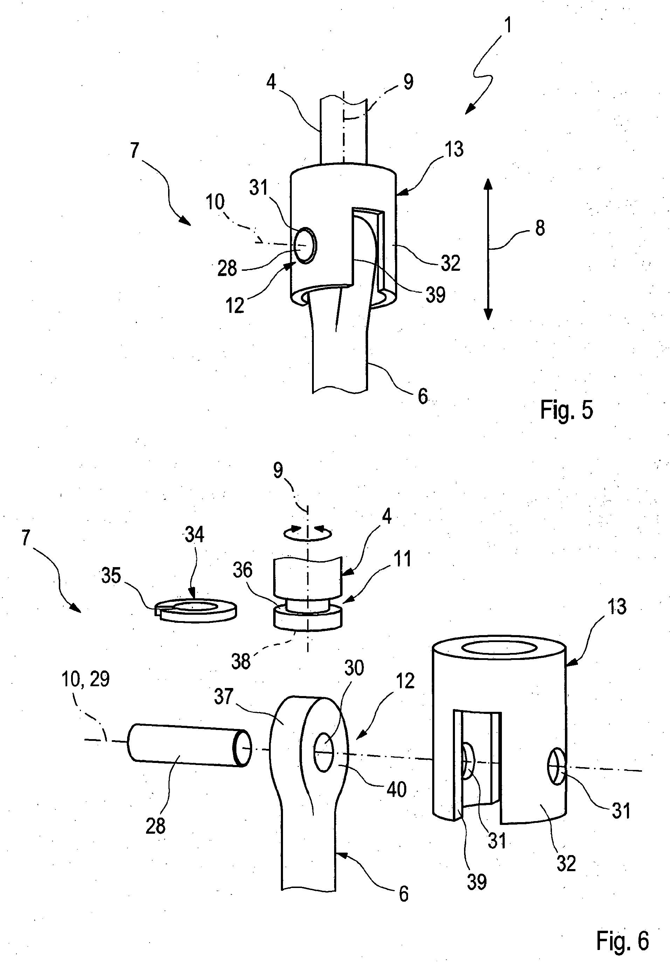

Die Fig. 5 bis 8 zeigen eine andere Ausführungsform für die Kopplungseinrichtung 7, die sich prinzipiell von der in den Fig. 1 bis 4 gezeigten Ausführungsform dadurch unterscheidet, dass über das Drehlager 11 das Antriebsglied 4 am Lagergehäuse 13 drehbar angeordnet ist, während über das Schwenklager 12 das Abtriebsglied 6 am Lagergehäuse 13 schwenkbar angeordnet ist.

Zur Realisierung des Schwenklagers 12 ist auch bei dieser Ausführungsform ein Lagerzapfen 28 vorgesehen, dessen Längsmittelachse 29 mit der Schwenkachse 10 zusammenfällt bzw. diese definiert. Für diesen Lagerzapfen 28 ist das Abtriebsglied 6 mit einem Lagerauge 30 ausgestattet, das vom Lagerzapfen 28 durchsetzt ist. Beiderseits dieses Lagerauges 30 ragt der Lagerzapfen 28 in entsprechende Zapfenaufnahmen 31 hinein, die in einer Wandung 32 des Lagergehäuses 13 dafür vorgesehen sind. Dabei ist der Lagerzapfen 28 zweckmäßig in die Zapfenaufnahmen 31 eingepresst, während das Abtriebsglied 6 in seinem Lagerauge 30 am Lagerzapfen 28 um die Schwenkachse 10 verschwenkbar gelagert ist. Grundsätzlich ist auch eine umgekehrte Bauform denkbar, bei welcher der Lagerzapfen 28 in das Lagerauge 30 eingepresst ist und in den Lageraufnahmen 31 des Lagergehäuses 13 drehbar gelagert ist. In jedem Fall ergibt sich auch hier eine Konfiguration, bei welcher sich der Lagerzapfen 28 einerseits am Lagergehäuse 13 und andererseits am Abtriebsglied 6 abstützt, wobei sich der Lagerzapfen 28 im einzelnen fest am Abtriebsglied 6 angeordnet sein kann und am Lagergehäuse 13 um die Schwenkachse 10 schwenkbar angeordnet sein kann.

Das Drehlager 11 ist bei der in den Fig. 5 bis 8 gezeigten Ausführungsform mit Hilfe einer Ringstufe 33 realisiert, die am Lagergehäuse 13 ausgebildet ist. Die Ringstufe 33 befindet sich dabei an einer Innenseite des Lagergehäuses 13. An dieser Ringstufe 33 ist ein Ring 34 in der Bewegungsrichtung 8 abgestützt. Dieser Ring 34, der entsprechend Fig. 6 eine Unterbrechung 35 aufweisen kann, greift in eine Ringnut 36 ein, die am Antriebglied 3 ausgeformt ist. Über diesen Ring 34 ergibt sich eine um die Drehachse 9 drehbare Abstützung zwischen Antriebsglied 4 und Lagergehäuse 13, wobei der Ring 34 in der Ringnut 36 um die Drehachse 9 verdrehbar angeordnet ist oder an der Ringstufe 33 um die Drehachse 9 verdrehbar angeordnet ist. Ebenso ist es möglich, dass sich der Ring 34 sowohl an der Ringstufe 33 als auch in der Ringnut 36 um die Drehachse 9 verdrehbar abstützt.

Das Abtriebsglied 6 kann an einem dem Antriebsglied 4 zugewandten Ende eine Stirnseite 37 aufweisen, die koaxial zur Schwenkachse 10 zylindersegmentförmig geformt ist. Beispielsweise erstreckt sich die Zylinderform der Stirnseite 37 um etwa 180° oder um etwa 120°. Ferner kann das Antriebsglied 4 an seinem dem Abtriebsglied 6 zugewandten Ende eine Stirnseite 38 aufweisen, die senkrecht zur Drehachse 9 eben ausgestaltet ist. Die Abmessungen der einzelnen Komponenten sind so aufeinander abgestimmt, dass sich das Antriebsglied 4 zumindest bei einer Druckkraftüberteagun.g am Abtriebsglied 6 abstützt, wobei dann die Stirnseite 38 des Antriebsglieds 4 an der Stirnseite 37 des Abtriebsglieds 6 zur Anlage kommt. Dabei erfolgt diese Abstützung in einer senkrecht zur Schwenkachse 10 verlaufenden Richtung. Ferner erfolgt diese Kraftübertragung unabhängig von der Schwenklage des Abtriebsglieds 6 frei von Drehmomenten, da die zylindersegmentförmige bzw. kreiszylindersegmentförmige Stirnseite 37 die vom Antriebsglied 4 eingeleitete Kraft drehmomentfrei auf den Lagerzapfen 28 überträgt.

Die Wandung 32 des Lagergehäuses 13 ist mit seitlichen Unterbrechungen 39 versehen, die es ermöglichen, dass sich das Lagerauge 30 bzw. eine Einfassung 40 des Lagerauges 30 bis in die Unterbrechungen 39 hineinerstreckt.

## Patentansprüche

1. Kopplungseinrichtung zum Koppeln eines Antriebsglieds (4) mit einem Abtriebsglied (6), insbesondere für eine Stellvorrichtung (1) zum Betätigen eines Stellglieds (5),
- wobei die Kopplungseinrichtung (7) ein Lagergehäuse (13) aufweist und eine das Lagergehäuse (13), das Antriebsglied (4) und das Abtriebsglied (6) umfassende, bidirektional in einer Bewegungsrichtung (8) verstellbare Einheit bildet,
- wobei die Kopplungseinrichtung (7) das Antriebsglied (4) unit dem Abtriebsglled (6) um eine parallel zur Bewegungsrichtung (8) der Einheit verlaufende Drehachse (9) verdrehbar und um eine quer zur Drehachse (9) verlaufende Schwenkachse (10) verschwenkbar verbindet,
- wobei die Kopplungseinrichtung (7) am Lagergehäuse (13) ein Drehlager (11) zur drehbaren Lagerung zwischen Antriebsglied (4) und Abtriebsglied (6) um die Drehachse (9) aufweist,
- wobei die Kopplungseinrichtung (7) am Lagergehäuse (13) separat und zusätzlich zum Drehlager (11) ein Schwenklager (12) zur schwenkbaren Lagerung zwischen Antriebsglied (4) und Abtriebsglied (6) um die Schwenkachse (10) aufweist,
- wobei das Schwenklager (12) einen zylindrischen Lagerzapfen (14; 28) aufweist, dessen Längsmittelachse (15; 29) koaxial zur Schwenkachse (10) verläuft und der einerseits am Lagergehäuse (13) und andererseits am Abtriebsglied (6) abgestützt ist.

2. Kopplungseinrichtung nach Anspruch 1,
**dadurch gekennzeichnet,**
**dass** der Lagerzapfen (14; 28) fest am Abtriebsglied (6) angeordnet ist und im oder am Lagergehäuse (13) um die Schwenkachse (10) schwenkbar angeordnet ist.

3. Kopplungseinrichtung nach Anspruch 2,
**dadurch gekennzeichnet,**
**dass** der Lagerzapfen (14) im oder am Lagergehäuse (13) auch um die Drehachse (9) drehbar angeordnet ist.

4. Kopplungseinrichtung nach Anspruch 2 oder 3.
**dadurch gekennzeichnet,**
**dass** sich der Lagerzapfen (14) über einen Lagerring (16) am Lagergehäuse (13) in der Bewegungsrichtung (8) abstützt, der eine vom Abtriebsglied (6) durchsetzte zentrale Öffnung (17) und beiderseits davon je eine zylindersegmentförmige Lagerkontur (18) aufweist, auf denen sich der Lagerzapfen (14) abstützt und in denen der Lagerzapfen (14) um die Schwenkachse (10) schwenkbar gelagert ist.

5. Kopplungseinrichtung nach den Ansprüchen 3 und 4,
**dadurch gekennzeichnet,**
**dass** der Lagerring (16) gegenüber den zylindersegmentförmigen Lagerkonturen (18) eine die Öffnung (17) ringförmig umschließende ebene Lagerkontur (19) aufweist, mit der er sich am Lagergehäuse (13) abstützt und über die er um die Drehachse (9) drehbar am Lagergehäuse (13) gelagert ist.

6. Kopplungseinrichtung nach einem der Ansprüche 1 bis 5,
**dadurch gekennzeichnet.**
**dass** am Lagergehäuse (13) eine Lagerkonsole (21) befestigt ist, an welcher das Antriebsglied (4) angebracht ist.

7. Kopplungseinrichtung nach Anspruch 6,
**dadurch gekennzeichnet,**
**dass** die Lagerkonsole (21) eine dem Abtriebsglied (6) zugewandte ebene Lagerseite (25) aufweist, an welcher sich der Lagerzapfen (14) zumindest bei einer Druckkraftübertragung abstützt.

8. Kopplungseinrichtung nach Anspruch 6 oder 7,
**dadurch gekennzeichnet,**
**dass** das Antriebsglied (4) um eine quer zur Bewegungsrichtung (8) verlaufende Kopplungsachse (23) drehbar an der Lagerkonsole (21) gelagert ist.

9. Kopplungseinrichtung nach Anspruch 1 oder 2,
**dadurch gekennzeichnet,**
**dass** das Antriebsglied (4) über das Drehlager (11) am Lagergehäuse (13) drehbar angeordnet ist, während das Abtriebsglied (6) über das Schwenklager (12) am Lagergehäuse (13) schwenkbar angeordnet ist.

10. Kopplungseinrichtung nach Anspruch 9,
**dadurch gekennzeichnet,**
- **dass** das Schwenklager (12) einen Lagerzapfen (28) aufweist, dessen Längsmittelachse (29) koaxial zur Schwenkachse (10) verläuft, der das Abtriebsglied (6) in einem Lagerauge (30) durchsetzt und der beiderseits des Lagerauges (30) In eine Wandung (32) des Lagergehäuses (13) hineinragt, und/oder
- **dass** das Drehlager (11) eine am Lagergehäuse (13) ausgebildete Ringstufe (33) aufweist, an der ein Ring (34) abgestützt ist, der in eine am Antriebsglied (4) ausgebildete Ringnut (36) eingreift, wobei der Ring (34) an der Ringstufe (33) und/oder in der Ringnut (36) um die Drehachse (9) drehbar gelagert ist, und/oder
- **dass** das Abtriebsglied (6) an einem dem Antriebsglied (4) zugewandten Ende koaxial zur Schwenkachse (10) eine zylindersegmentförmige Stirnseite (37) aufweist.

11. Kopplungseinrichtung nach einem der Ansprüche 9 bis 10,
**dadurch gekennzeichnet,**
**dass** das Antriebsglied (4) an einem dem Abtriebsglied (6) zugewandten Ende senkrecht zur Drehachse (9) eine ebene Stirnseite (38) aufweist.

12. Kopplungseinrichtung nach einem der Ansprüche 9 bis 11,
**dadurch gekennzeichnet,**
**dass** sich das Antriebsglied (4) über seine dem Abtriebsglied (6) zugewandte Stirnseite (38) zumindest bei einer Druckkraftübertragung am Abtriebsglied (6) an dessen, dem Antriebsglied (4) zugewandter Stirnseite (37) abstützt.

13. Stellvorrichtung zum Betätigen eines Stellglieds (6), insbesondere bei einer Brennkraftmaschine, vorzugsweise in einem Kraftfahrzeug,
- mit einem Stellantrieb (2) zum bidirektionalen Antreiben eines Antriebsglieds (4),
- mit einem Abtriebsglied (6), das mit dem Stellglied (5) antriebsverbunden oder antriebsverbindbar ist,
- mit einer Kopplungseinrichtung (7) nach einem der Ansprüche 1 bis 12 zum Koppeln des Antriebsglieds (4) mit dem Abtriebsglied (6).

14. Verwendung einer Stellvorrichtung nach Anspruch 13,
- zum Betätigen eines Wastegates einer Turbine eines Abgasturbolader, und/oder
- zum Betätigen einer variablen Geometrie eines Abgasturboladers, insbesondere einer Turbine oder eines Verdichters des Turboladers, und/oder
- zum Betätigen eines Abgasventils, und/oder
- zum Betätigen eines Abgasrückführventils, und/oder
- zum Betätigen eines Frischluftventils, und/oder
- zum Betätigen einer, insbesondere frischluftseitigen oder abgasseitigen, Klappenanordnung.

15. Brennkraftmaschine, insbesondere in einem Kraftfahrzeug, mit einer Stellvorrichtung nach Anspruch13.

## Claims

1. Coupling device for coupling a drive member (4) to a driven member (6), in particular for a control apparatus (1) for actuating a control element (5),
- wherein the coupling device (7) comprises a bearing housing (13) and forms a unit which comprises the bearing housing (13), the drive member (4) and the driven member (6) and can be adjusted bidirectionally in a movement direction (8),
- wherein the coupling device (7) connects the drive member (4) to the driven member (6) such that it can rotate about an axis of rotation (9) which extends parallel to the movement direction (8) of the unit and such that it can swivel about a swivel axis (10) which extends transversely to the axis of rotation (9),
- wherein the coupling device (7) comprises a pivot bearing (11) on the bearing housing (13) for mounting between the drive member (4) and the driven member (6) so as to be able to rotate about the axis of rotation (9),
- wherein the coupling device (7) comprises, separately and in addition to the pivot bearing (11), a swivel bearing (12) on the bearing housing (13) for mounting between the drive member (4) and the driven member (6) so as to be able to swivel about the swivel axis (10),
- wherein the swivel bearing (12) comprises a cylindrical bearing pin (14; 28), the longitudinal centre line (15; 29) of which extends coaxially with the swivel axis (10) and is supported on one side on the bearing housing (13) and on the other side on the driven member (6).

2. Coupling device according to claim 1, **characterised in that** the bearing pin (14; 28) is arranged in a fixed manner on the driven member (6) and is arranged in or on the bearing housing (13) such that it can swivel about the swivel axis (10).

3. Coupling device according to claim 2, **characterised in that** the bearing pin (14) is also arranged in or on the bearing housing (13) such that it can rotate about the axis of rotation (9).

4. Coupling device according to either claim 2 or claim 3, **characterised in that** the bearing pin (14) is supported via a bearing ring (16) on the bearing housing (13) in the movement direction (8), which ring comprises a central opening (17) through which the driven member (6) passes and which has a cylinder-segment-shaped bearing contour (18) on either side of said opening, on which contour the bearing pin (14) is supported and in which the bearing pin (14) is mounted such that it can swivel about the swivel axis (10).

5. Coupling device according to claims 3 and 4, **characterised in that** the bearing ring (16) has, opposite the cylinder-segment-shaped bearing contours (18), a planar bearing contour (19) which annularly surrounds the opening (17), by means of which contour the bearing ring is supported on the bearing housing (13) and via which contour said ring is mounted on the bearing housing (13) such that it can rotate about the axis of rotation (9).

6. Coupling device according to any of claims 1 to 5, **characterised in that** a bearing bracket (21) is fastened to the bearing housing (13), to which bracket the drive member (4) is attached.

7. Coupling device according to claim 6, **characterised in that** the bearing bracket (21) comprises a planar bearing side (25) which faces the driven member (6) and on which the bearing pin (14) is supported at least when compressive force is transmitted.

8. Coupling device according to either claim 6 or claim 7, **characterised in that** the drive member (4) is mounted on the bearing bracket (21) such that it can rotate about a coupling axis (23) which extends transversely to the movement direction (8).

9. Coupling device according to either claim 1 or claim 2, **characterised in that** the drive member (4) is arranged via the pivot bearing (11) on the bearing housing (13) such that it can rotate, whereas the driven member (6) is arranged via the swivel bearing (12) on the bearing housing (13) such that it can swivel.

10. Coupling device according to claim 9, **characterised in that**
- the swivel bearing (12) comprises a bearing pin (28), the longitudinal centre line (29) of which extends coaxially with the swivel axis (10), which pin passes through a bearing eye (30) in the driven member (6) and protrudes into a wall (32) of the bearing housing (13) on either side of the bearing eye (30), and/or
- the pivot bearing (11) comprises an annular step (33) which is formed on the bearing housing (13) and on which a ring (34) is supported which engages in an annular groove (36) which is formed on the drive member (4), the ring (34) being mounted on the annular step (33) and/or in the annular groove (36) such that it can rotate about the axis of rotation (9), and/or
- the driven member (6) comprises a cylinder-segment-shaped end face (37) on an end which faces the drive member (4), which end face is coaxial with the swivel axis (10).

11. Coupling device according to either claim 9 or claim 10, **characterised in that** the drive member (4) comprises a planar end face (38) on an end which faces the driven member (6), which end face is perpendicular to the axis of rotation (9).

12. Coupling device according to any of claims 9 to 11, **characterised in that** the drive member (4) is supported via the end face (38) thereof which faces the driven member (6) on the end face (37) of said driven member which faces the drive member (4), at least when compressive force is transmitted to the driven member (6).

13. Control apparatus for actuating a control element (5), in particular in an internal combustion engine, preferably in a motor vehicle,
- comprising an actuating drive (2) for bidirectionally driving a drive member (4),
- comprising a driven member (6) which is or can be drivingly connected to the control element (5),
- comprising a coupling device (7) according to any of claims 1 to 12 for coupling the drive member (4) to the driven member (6).

14. Use of a control apparatus according to claim 13,
- for actuating a waste gate of a turbine of an exhaust-gas turbocharger, and/or
- for actuating a variable geometry of an exhaust-gas turbocharger, in particular of a turbine or of a compressor of the turbocharger, and/or
- for actuating an exhaust gas valve, and/or
- for actuating an exhaust gas recirculation valve, and/or
- for actuating a fresh air valve, and/or
- for actuating an in particular fresh-air-side or exhaust-gas-side flap arrangement.

15. Internal combustion engine, in particular in a motor vehicle, comprising a control apparatus according to claim 13.

## Revendications

1. Dispositif d'accouplement pour accoupler un élément menant (4) avec un élément mené (6), en particulier pour un dispositif de réglage (1) afin de commander un élément de réglage (5),
- dans lequel le dispositif d'accouplement (7) présente un logement de palier (13) et forme une unité comprenant le logement de palier (13), l'élément menant (4) et l'élément mené (6) et déplaçable bi-directionnellement dans une direction de déplacement (8),
- dans lequel le dispositif d'accouplement (7) relie à rotation l'élément menant (4) à l'élément mené (6) autour d'un axe de rotation (9) s'étendant parallèlement à la direction de déplacement (8) de l'unité et à pivotement autour d'un axe pivot (10) s'étendant transversalement à l'axe de rotation (9),
- dans lequel le dispositif d'accouplement (7) présente sur le logement de palier (13) un palier de rotation (11) pour le montage à rotation entre l'élément menant (4) et l'élément mené (6) autour de l'axe de rotation (9),
- dans lequel le dispositif d'accouplement (7) présente sur le logement de palier (13) séparément et en plus du palier de rotation (11) un palier de pivotement (12) pour le montage pivotant entre l'élément menant (4) et l'élément mené (6) autour de l'axe pivot (10),
- dans lequel le palier de pivotement (12) présente un tourillon cylindrique (14 ; 28), dont l'axe central longitudinal (15 ; 29) s'étend coaxialement à l'axe pivot (10) et qui est supporté, d'une part, sur le logement de palier (13), et, d'autre part, sur l'élément mené (6).

2. Dispositif d'accouplement selon la revendication 1,
**caractérisé en ce que** :
le tourillon (14 ; 28) est assemblé fixe sur l'élément mené (6) et est monté à pivotement autour de l'axe pivot (10) dans ou sur le logement de palier (13).

3. Dispositif d'accouplement selon la revendication 2,
**caractérisé en ce que** :
le tourillon (14) est également monté à rotation autour de l'axe de rotation (9) dans ou sur le logement de palier (13).

4. Dispositif d'accouplement selon la revendication 2 ou la revendication 3,
**caractérisé en ce que** :
le tourillon (14) s'appuie via une bague de palier (16) dans le logement de palier (13) dans la direction de déplacement (8), qui présente une ouverture centrale (17) traversée par l'élément mené (6) et, des deux côtés de celle-ci, un contour de palier (18) conçu en forme de segment de cylindre, sur lequel le tourillon (14) s'appuie et dans lequel le tourillon (14) est monté à pivotement autour de l'axe pivot (10).

5. Dispositif d'accouplement selon les revendications 3 et 4,
**caractérisé en ce que** :
la bague de palier (16) présente en regard des contours de palier en forme de segments de cylindre (18) un contour de palier plan (19) entourant l'ouverture (17) en forme annulaire, avec lequel contour il s'appuie sur le logement de palier (13) et par lequel il est monté à rotation autour de l'axe de rotation (9) sur le logement de palier (13).

6. Dispositif d'accouplement selon l'une quelconque des revendications 1 à 5,
**caractérisé en ce que** :
dans le logement de palier (13) est fixée une console de palier (21) sur laquelle l'élément menant (4) est monté.

7. Dispositif d'accouplement selon la revendication 6,
**caractérisé en ce que** :
la console de palier (21) présente un côté palier plan (25) tourné vers l'élément mené (6), sur lequel côté le tourillon (14) s'appuie au moins lors d'une transmission de force de compression.

8. Dispositif d'accouplement selon la revendication 6 ou la revendication 7,
**caractérisé en ce que** :
l'élément menant (4) est monté à rotation sur la console de palier (21) autour d'un axe d'accouplement (23) s'étendant transversalement à la direction de déplacement (8).

9. Dispositif d'accouplement selon la revendication 1 ou la revendication 2,
**caractérisé en ce que** :
l'élément menant (4) est monté à rotation via le palier de rotation (11) dans le logement de palier (13), tandis que l'élément mené (6) est monté à pivotement via le palier de pivotement (12) dans le logement de palier (13).

10. Dispositif d'accouplement selon la revendication 9,
**caractérisé en ce que** :
- le palier de pivotement (12) présente un tourillon (28) dont l'axe central longitudinal (29) s'étend coaxialement à l'axe pivot (10), qui traverse l'élément mené (6) dans un oeillet de palier (30) et qui dépasse, des deux côtés de l'oeillet de palier (30), d'une paroi (32) du logement de palier (13), et/ou
- le palier de rotation (11) présente un gradin annulaire (33) formé dans le logement de palier (13), sur lequel gradin s'appuie une bague (34) qui s'engage dans une rainure annulaire (36) formée sur l'élément menant (4), dans lequel la bague (34) est montée à rotation autour de l'axe de rotation (9) sur le gradin annulaire (33) et/ou dans la rainure annulaire (36), et/ou
- l'élément mené (6) présente à une extrémité tournée vers l'élément menant (4) coaxialement avec l'axe pivot (10) une face avant en forme de segments de cylindre (37).

11. Dispositif d'accouplement selon l'une quelconque des revendications 9 à 10,
**caractérisé en ce que** :
l'élément menant (4) présente une face avant plane (38) à une extrémité tournée vers l'élément mené (6) perpendiculairement à l'axe de rotation (9).

12. Dispositif d'accouplement selon l'une quelconque des revendications 9 à 11,
**caractérisé en ce que** :
l'élément menant (4) s'appuie, via sa face avant (38) tournée vers l'élément mené (6), au moins dans le cas d'une transmission de force de compression sur l'élément mené (6) sur sa face avant (37) tournée vers l'élément menant (4).

13. Dispositif de commande d'un élément de réglage (5), en particulier dans le cas d'une machine à combustion interne, de préférence dans un véhicule automobile, comprenant :
- un entraînement de réglage (2) pour assurer l'entraînement bidirectionnel d'un élément menant (4),
- un élément mené (6) qui est relié ou peut être relié en mode d'entraînement avec l'élément de réglage (5),
- un dispositif d'accouplement (7) selon l'une quelconque des revendications 1 à 12 pour accoupler l'élément menant (4) à l'élément mené (6).

14. Utilisation d'un dispositif de réglage selon la revendication 13, comprenant les étapes consistant à :
- commander un papillon de réglage d'une turbine de turbosoufflante à gaz d'échappement et/ou
- commander la géométrie variable d'une turbosoufflante à gaz d'échappement, en particulier d'une turbine ou d'un compresseur de la turbosoufflante et/ou
- commander une vanne à gaz d'échappement et/ou
- commander une électrovanne de recyclage des gaz d'échappement et/ou
- commander une vanne d'air frais et/ou
- commander un aménagement de clapets, en particulier côté air frais ou côté gaz d'échappement.

15. Moteur à combustion interne, en particulier dans un véhicule automobile, équipé d'un dispositif de réglage selon la revendication 13.
